(19) Europäisches Patentamt
European Patent Office
Office européen des brevets

(11) EP 1 243 507 B1

(12) EUROPÄISCHE PATENTSCHRIFT

(45) Veröffentlichungstag und Bekanntmachung des Hinweises auf die Patenterteilung:
**29.09.2004 Patentblatt 2004/40**

(51) Int Cl.⁷: **B64G 1/28**

(21) Anmeldenummer: 02004801.3

(22) Anmeldetag: **02.03.2002**

(54) **Verfahren zum Betrieb eines rotierenden Raumfahrzeugs mit variierender Rotationsgeschwindigkeit**

Method of operating a spinning space vehicle with varying rotation speed

Méthode d'opération d'un engin spatial rotatif avec vitesse de rotation variable

(84) Benannte Vertragsstaaten:
**DE ES FR GB IT**

(30) Priorität: **22.03.2001 DE 10114085**

(43) Veröffentlichungstag der Anmeldung:
**25.09.2002 Patentblatt 2002/39**

(73) Patentinhaber: **EADS Astrium GmbH**
**81663 München (DE)**

(72) Erfinder:
• **Brüderle, Ernst**
**83646 Bad Tölz (DE)**
• **Kieffer, Raoul**
**80333 München (DE)**

(74) Vertreter: **Ulrich, Thomas**
**EADS Deutschland GmbH,**
**LG-PM - Patente**
**81663 München (DE)**

(56) Entgegenhaltungen:
**US-A- 3 412 955    US-A- 3 973 745**
**US-A- 6 017 003**

• **PATENT ABSTRACTS OF JAPAN vol. 1999, no. 11, 30. September 1999 (1999-09-30) & JP 11 152096 A (NEC CORP), 8. Juni 1999 (1999-06-08)**

**Beschreibung**

Die vorliegende Erfindung betrifft ein Verfahren zum Betrieb eines Raumfahrzeuges, das zumindest eine mit einem Himmelskörper zusammenwirkende Einrichtung aufweist, wobei eine Rotation des Raumfahrzeuges um zumindest eine Körperachse des Raumfahrzeuges erfolgt.

Solche Raumfahrzeuge wie beispielsweise Satelliten sind aus dem Stand der Technik hinlänglich bekannt, beispielsweise aus JP 11 152096, die eine Möglichkeit beschreibt, mit Hilfe von Drallrädern einem Satelliten mit einer Rotation (Spin) zu versehen.

Ein Problem beim Betrieb von Satelliten in einem Orbit ist die optimale Energiegewinnung mit Hilfe von Solargeneratoren. Die Satelliten weisen dazu in der Regel mindestens eine Solargeneratorfläche auf, die entweder direkt auf dem Satellitenkörper angeordnet sein kann oder in Form von entfaltbaren Solargenerator-Paneels ausgebildet sein kann. Eine Schwierigkeit bei der Energiegewinnung mittels solcher Solargeneratoren ist die optimale Ausrichtung der Solargeneratorfläche zur Sonne. Dies ist beispielsweise in US 6,017,003 ausgeführt, in der eine Eigenrotation des Satelliten von 360 ° pro Orbit beschrieben wird, um stets eine Ausrichtung der Solargeneratoren in Richtung der Sonne zu erhalten und dadurch ein Maximum an Energiegewinnung zu garantieren. Andererseits führt eine konstante Ausrichtung von Teilflächen des Satelliten, wie insbesondere der Solargeneratoren, zur Sonne auch zu einer starken Erwärmung der entsprechenden Flächen, insbesondere der Solargeneratorflächen. Es hat sich herausgestellt, dass eine zu starke Erwärmung der Solargeneratoren deren Leistungsfähigkeit beeinträchtigt. Die Problematik der Erwärmung durch die Sonneneinstrahlung ist beispielsweise in US 6,102,339 dargestellt und es wird dort zur Lösung vorgeschlagen, strahlungsabschirmende Einrichtungen zu verwenden, die jedoch die Satellitenmasse unnötig vergrößern und den gesamten Satellitenaufbau verkomplizieren. Die DE 195 44 641 beschreibt das Problem der durch abwechselnde Beleuchtungs- und Schattenphasen auftretenden Thermalzyklen bei Erdsatelliten und die damit verbundenen thermomechanischen Belastungen für Solargeneratoren, die in diesem Dokument durch entsprechend verbesserte elektrische Leiter ausgeglichen werden sollen. Auch B.J. Saint-Jean, "Theoretical considerations for a preliminary design of a solar cell generator on a satellite", NASA TN D-1904, 1963 beschreibt die auftretenden Thermalzyklen bei rotierenden Satelliten.

Ähnliche Probleme, die eine optimale Ausrichtung einer Einrichtung eines Raumfahrzeuges, die mit einem Himmelskörper zusammenwirkt, betreffen, können auch z.B. im Hinblick auf Kommunikationseinrichtungen des Raumfahrzeuges auftreten, die mit entsprechenden Sende- und/oder Empfangseinrichtungen auf einem Himmelskörper wie beispielsweise der Erde kommunizieren, oder auch bei Mess- oder Beobachtungseinrichtungen, die zur Vermessung oder Beobachtung bestimmter Himmelskörper eingesetzt werden.

Aufgabe der vorliegenden Erfindung ist es, eine möglichst optimalen Einsatz von Einrichtungen des Raumfahrzeuges zu erlauben, die mit einem Himmelskörper zusammenwirken. Für eine möglichen Anwendung auf Solargeneratoren ist dabei das Ziel, eine hohe Ausbeute an Energie aus der auf das Raumfahrzeug einfallenden Sonnenstrahlung zu gewinnen, und dabei die Nachteile des Standes der Technik zu vermeiden.

Diese Aufgabe wird gelöst durch die Merkmale des Anspruchs 1. Erfindungsgemäß wird ein Verfahren zum Betrieb eines Raumfahrzeuges vorgesehen, wobei das Raumfahrzeug zumindest eine mit einem Himmelskörper zusammenwirkende Einrichtung aufweist. Es erfolgt eine Rotation des Raumfahrzeuges um zumindest eine Körperachse des Raumfahrzeuges, wie bereits hinlänglich aus dem Stand der Technik für Satelliten bekannt. Es wird nun jedoch vorgesehen, dass die Rotation nicht gleichförmig erfolgt, sondern die Rotation des Raumfahrzeuges wird verlangsamt, wenn die mit dem Himmelskörper zusammenwirkende Einrichtung im wesentlichen in Richtung des Himmelskörpers ausgerichtet ist. Man erhält damit eine Rotation des Raumfahrzeuges mit unterschiedlicher Rotationsgeschwindigkeit, je nachdem, ob eine entsprechende Einrichtung des Raumfahrzeuges im wesentlichen in Richtung des Himmelskörpers ausgerichtet ist, mit dem sie zusammenwirken soll, oder ob sie davon abgewandt ist. Sind mehrere gleichwirkende Einrichtungen an dem Raumfahrzeug angeordnet oder verschiedene Einrichtungen, die mit verschiedenen Himmelskörpern zusammenwirken, so kann immer dann, wenn eine solche Einrichtung im wesentlichen in Richtung des entsprechenden Himmelskörpers ausgerichtet ist, eine Verlangsamung der Rotation erfolgen. Im wesentlichen bedeutet hier, dass die Verlangsamung nicht lediglich dann erfolgen muss, wenn die Einrichtung exakt auf den Himmelskörper ausgerichtet ist, sondern es wird bereits aus Gründen der praktischen Umsetzung vorzusehen sein, dass in einem gewissen Winkelbereich um diese exakte Ausrichtung, also um die Verbindungslinie zwischen dem Raumfahrzeug und dem Zentrum des Himmelskörpers, eine Verlangsamung der Rotation erfolgt, beispielsweise in einem Bereich von - 45 ° bis + 45 °, wobei die Abweichung auch geringere Winkelbeträge betragen kann wie z.B. 30 °, 15 ° oder auch einen Bereich kleiner 10 °. Dies wird auch an den Raumwinkelbereich anzupassen sein, den der Himmelskörper vom Raumfahrzeug aus gesehen einnimmt.

Durch dieses Verfahren erhält man eine Kombination der Vorteile einer Rotation des Raumfahrzeuges um eine Körperachse mit den Vorteilen einer längeren Ausrichtung der Einrichtungen auf den entsprechenden Himmelskörper, mit dem sie zusammenwirken, die aus der verlangsamten Rotation in diesen Bereichen resultiert. Damit wird das Zusammenwirken mit dem Himmelskörper optimiert.

Wie bereits erwähnt, können die mit einem Himmelskörper zusammenwirkenden Einrichtungen, beispielsweise als Solargeneratorflächen, Kommunikationseinrichtungen, Mess- oder Beobachtungseinrichtungen ausgebildet sein. Das Raumfahrzeug kann beispielsweise als Satellit ausgebildet sein, der sich in einem Orbit befindet, aber auch als Raumsonde oder jede andere Art von Raumfahrzeug.

Für die spezielle Anwendung des erfindungsgemäßen Verfahrens mit Hinblick auf mindestens eine Solargeneratorfläche des Raumfahrzeuges wird vorgesehen, dass die Rotation verlangsamt wird, wenn die Normale zumindest einer Solargeneratorfläche im wesentlichen in Richtung der Sonne ausgerichtet ist. Ist die Normale der Solargeneratorfläche während der Rotation jedoch stets um einen bestimmten Winkelbetrag gegen die Verbindungslinie zwischen Raumfahrzeug und Sonne geneigt, also insbesondere wenn die Rotationsachse des Raumfahrzeuges nicht senkrecht auf der Verbindungslinie zwischen Raumfahrzeug und Sonne steht, so erfolgt die Verlangsamung der Rotation, wenn die Projektion der Normalen der Solargeneratorfläche auf die Verbindungsebene zwischen Raumfahrzeug und Sonne im wesentlichen in Richtung der Sonne ausgerichtet ist. Damit kann auch für diese Fälle eine Optimierung des Zusammenwirkens mit dem Himmelskörper, hier der Energieausbeute, erfolgen. Es kann eine im Vergleich zu einer gleichförmigen Rotation verlängerte, intensive Bestrahlung der vollen Solargeneratorfläche erreicht werden, wobei eine zu starke Erwärmung der Solargeneratorflächen durch die Rotation des Raumfahrzeuges vermieden wird, die für die einzelne Solargeneratorfläche jeweils Zyklen aus Bestrahlung und Abschattung erzeugt.

Dieses Verfahren kann für Solargeneratoren insbesondere dann Anwendung finden, wenn die Solargeneratorfläche durch nicht oder nur teilweise entfaltete Solargenerator-Paneels gebildet wird. In einem solchen Fall ist es besonders schwierig, die notwendige Energie für das Raumfahrzeug bereitzustellen, so dass eine optimale Ausnutzung der auftreffenden Sonnenstrahlung zur Energiegewinnung von hoher Bedeutung ist.

Für alle vorgenannten Fälle kann vorgesehen werden, dass die Rotation mit Hilfe von Drallrädern verlangsamt wird. Grundsätzlich könnten hierfür auch Düsen oder ähnliche Triebwerke oder andere, gleichwirkende Aktuatoren des Raumfahrzeuges verwendet werden, jedoch wäre gerade für den Fall der Triebwerke der zu erwartende Treibstoffverbrauch in der Regel relativ hoch.

Ein spezielles Ausführungsbeispiel wird nachfolgend anhand der Figuren 1 bis 3 erläutert.

Fig. 1: Schematische Darstellung eines rotierenden Satelliten mit nichtentfalteten Solargeneratoren

Fig. 2: Darstellung einer idealisierten variierenden Satellitenrotation

Fig. 3: Darstellung einer realistischen variierenden Satellitenrotation

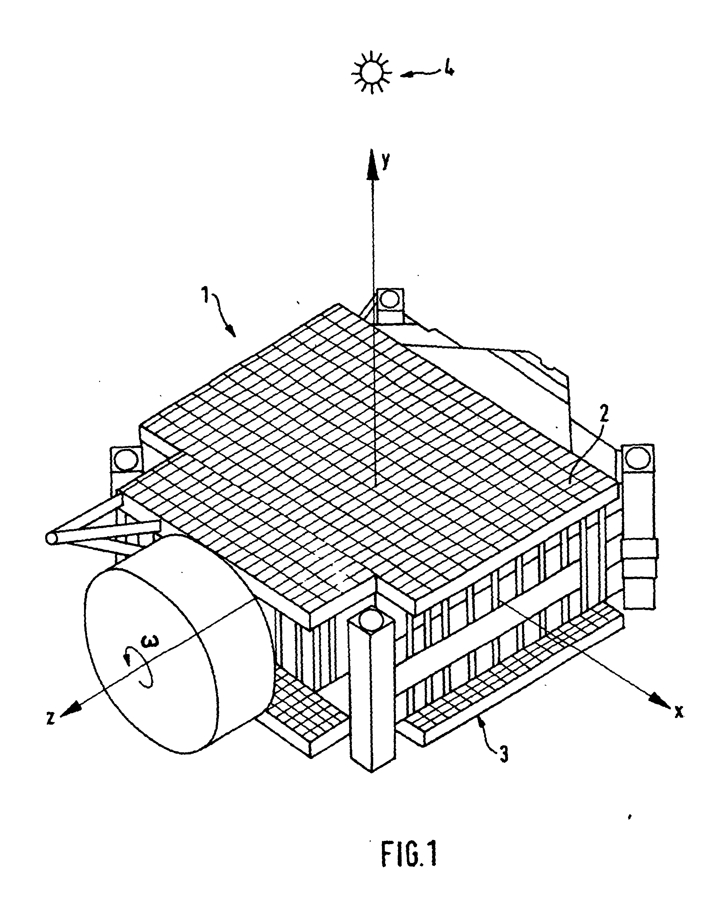

Es soll nun der spezielle Fall eines rotierenden Satelliten betrachtet werden, wie er in Fig. 1 beispielhaft dargestellt ist. Der Satellit 1 besitzt drei Körperachsen x, y, z und rotiert mit der Winkelgeschwindigkeit $\omega$ um die Körperachse z. Der Satellit 1 weist zwei Solargeneratoren 2, 3 auf, die auf gegenüberliegenden Seiten des Satelliten 1 angeordnet sind. Die Solargeneratoren 2, 3 sind in Fig. 1 im nicht-entfalteten Zustand dargestellt, die Normale der Solargeneratoren 2, 3 fällt dann mit der positiven bzw. negativen y-Achse zusammen. Fig. 1 zeigt eine Momentaufnahme der Rotation, in der die y-Achse, und damit die Normale des Solargenerators 2, gerade in Richtung der Sonne 4 ausgerichtet ist.

Bei einem Satelliten sind die Solargeneratoren üblicherweise beim Start gefaltet und werden erst nach der Trennung von der Rakete entfaltet. Für den Fall, dass es Probleme beim Entfalten gibt, die die Bodenstation untersuchen muss, um doch noch eine Entfaltung zu erreichen, oder dass eine Entfaltung erst zu einem späteren Zeitpunkt erfolgen kann, beispielsweise im endgültigen Orbit, braucht der Satellit genügend Energie, um seinen Thermalhaushalt stabil zu halten und die zur Lageregelung erforderlichen Geräte oder weitere Systeme betreiben zu können. Die in der Batterie gespeicherte Energie reicht im Allgemeinen nicht aus, um diesen Bedarf zu decken. Es ist daher notwendig, mit den noch gefalteten Generatoren Energie zu gewinnen. Den Satelliten kann man, wie in Fig. 1 dargestellt, im Allgemeinen als einen Quader ansehen, bei dem auf zwei gegenüberliegenden Seiten jeweils ein Teil des gefalteten Solargenerators nach außen zeigt. Bekannt sind zwei Verfahren, um in dieser Konfiguration Energie zu erzeugen:

- Man richtet eine Solargeneratorfläche mit ihrer Normalen zur Sonne aus und behält diese Orientierung bei,
- man lässt den Satelliten nach der oben erwähnten Ausrichtung um eine Achse senkrecht zur Solargeneratornormalen rotieren.

Die Leistung, die man erhält, ist gegeben durch

$$P = P_0(1 - a\,T)\cos\varphi$$

wobei

$P_0$: Leistung bei Temperatur 0° C und Sonnenrichtung gleich Richtung der Solargeneratornormalen in Watt [W]

T: Temperatur des Solargenerators in Grad Celsius [°C ]

$\varphi$: Winkel zwischen Sonnenrichtung und Solargeneratornormalen

a: eine Konstante a = 0.00364 [W/°C]

Beide oben angegebenen Verfahren haben nun einen Nachteil: Bei dem ersten Verfahren erhöht sich durch die permanente Sonneneinstrahlung kontinuierlich die Temperatur des Solargenerators, der zur Sonne zeigt, was zu einem Leistungsabfall führt. Bei dem zweiten Verfahren erreicht man aufgrund der Rotation mit

$$\varphi = \omega\, t$$

wobei $\omega$ die Rotationsfrequenz des Satelliten und t die Zeit ist, zwar eine geringere, mittlere Temperatur der Solargeneratoren, aber nicht immer den optimalen Sonneneinfallswinkel.

Nimmt man an, dass ohne Berücksichtigung von Eclipse-Phasen die der Sonne zugewandte Seite des Satelliten so viel Wärme aufnimmt wie die der Sonne abgewandte Seite abgibt, so kann man die Temperatur der beiden Solargeneratoren mit grober Näherung für relativ kleine Schatten-/Sonnen-Intervalle bis etwa 30 Minuten wie folgt beschreiben:

Der Sonne zugewandter Solargenerator:

$$T = T_0 + (50° - T_0)\,(1 - \exp(-0.0025\,(t - t_0)))$$

und für den von der Sonne abgewandten Solargenerator gilt

$$T = T_0 + (-50° - T_0)\,(1 - \exp(-0.0025\,(t - t_0)))$$

Dabei ist $T_0$ jeweils die Solargeneratortemperatur zur Zeit $t_0$.

Für die folgenden Betrachtungen kann ohne Beschränkung der Allgemeinheit angenommen werden, dass für $t_0 = 0$ die Temperatur beider Solargeneratoren 0° C war. Des Weiteren wird angenommen, dass die Sonne genau in -x-Richtung steht, also $\varphi\,(t_0)$ = -90° ist und bei einer positiven Drehung um die z-Achse der Solargenerator 2 gerade in die Sonne kommt und der Solargenerator 3 in den Schatten.

Bei einer periodischen Bewegung des Satelliten stellt sich schon nach kurzer Zeit auch ein periodischer Temperaturverlauf für beide Solargeneratoren ein, wobei ein Solargenerator eine Phasenverschiebung um eine halbe Periode hat.

Die Extremwerte des Temperaturverlaufs für eine Periodendauer D ergeben sich aus

$$-T_0 = T_0 + (50 - T_0)\,(1 - \exp(-0.0025D/2))$$

oder

$$T_0 = 50/(2/c-1) \quad \text{und} \quad T_0 = -50/(2/c-1)$$

mit

$$c = 1 - \exp(-0.0025D/2)$$

1. Fall gemäß Stand der Technik

Der Satellit dreht sich um die z-Achse mit konstanter Winkelgeschwindigkeit $\omega$. Die Dauer einer Umdrehung des Satelliten ist dann

$$D = 2 \pi / \omega$$

Für eine Drehrate von $\omega$ = 1°/sec ergibt sich also D = 360 sec.

Für diesen Fall schwanken die Temperaturen zwischen -11.1 °C und +11.1°C. Es wird im Folgenden immer nur ein Solargenerator betrachtet, da die Solargeneratorleistung wie das Temperaturverhalten ebenfalls periodisch ist.

Die mittlere von den Solargeneratoren erhaltene Leistung ergibt sich zu

$$P = P_0 2/D \int_0^{D/2} (1 - a50 + a61.1 \exp(-0.0025t)) abs(\cos \omega t - \pi / 2) dt$$

$$\alpha = 0.0025$$

$$P = P_0 \{(1-a50)2/\pi - 2a61.1/D [\exp(-\alpha t)(\omega \cos \omega t + \alpha \sin \omega t)/(\alpha^2 + \omega^2)]_0^{D/2}\}$$

$$P = P_0 (0.521 - 0.00124 [ -0.0111 - 0.0175 ]/3.108 \ 10^{-4}$$

$$P = P_0 (0.521 - 0.114) = 0.635 P_0$$

Man hat also eine erheblich geringere Leistung als $P_0$.

2. Fall gemäß Stand der Technik

Würde man den Satelliten nicht um die z-Achse drehen, sondern einen Solargenerator senkrecht zur Sonne ausrichten, so hätte man permanent die optimale Ausrichtung zur Sonne. Bei einer dauernden senkrechten Ausrichtung zur Sonne gilt aber das grobe Temperaturmodell, das eine stationäre Temperatur von 50° C vorhersagt, nicht mehr. In der Realität würde die Temperatur bis 120° C ansteigen.

Die vom Solargenerator erhaltene Leistung wäre dann

$$P = P_0 (1-a120) = 0.5632 P_0$$

also noch geringer als im vorigen Fall mit konstanter Drehrate.

Man sieht, dass bei den beiden angegebenen Fällen die Leistungseinbußen einmal durch den ungünstigen mittleren Sonneneinfallswinkel kommen und einmal durch die erhöhte Temperatur.

Es wird nun jedoch erfindungsgemäß vorgesehen, dass die Rotationsgeschwindigkeit des Satelliten variiert wird. Der Satellit 1 wird nach wie vor um die z-Achse mit einer Drehrate $\omega_0$ gedreht, bei den Positionen $\varphi$ = 0° und $\varphi$ = 180°, wenn also ein senkrechter Einfall der Sonne auf einen der Solargeneratoren gegeben ist, hält man die Rotation für eine Zeit Z an. Die Dauer einer Periode ist dann

$$U = 2Z + D$$

Im Folgenden wird für die drei Fälle U = 12 min, U = 24 min und U = 48 min die sich ergebende mittlere Leistung berechnet:

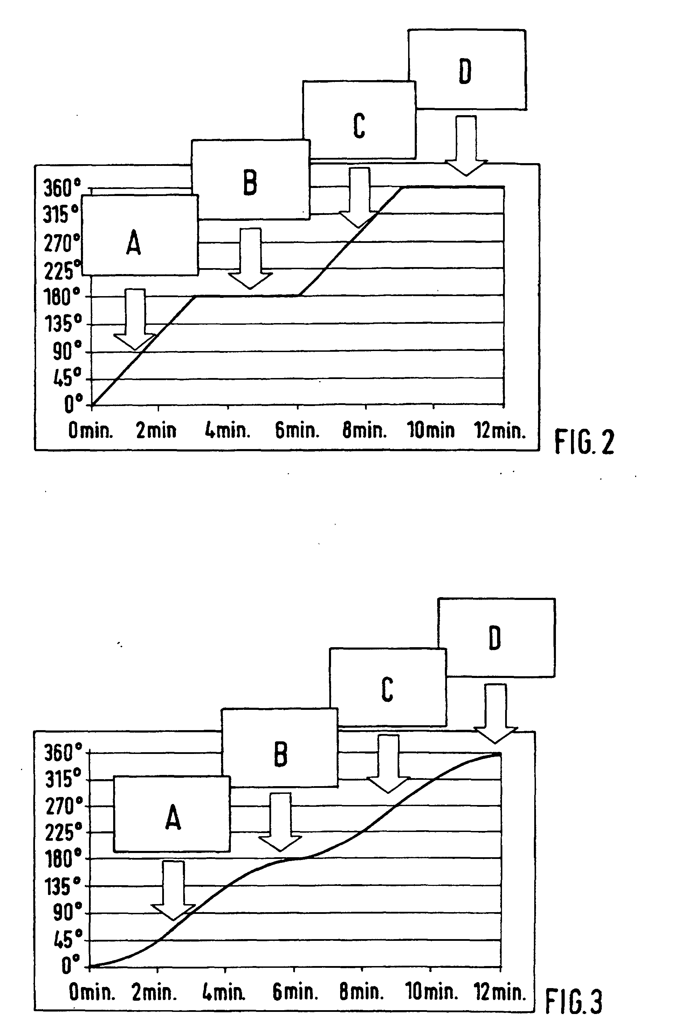

Für den Fall mit U = 12 min, der auch in den Figuren 2 und 3 dargestellt ist, wird der Satellit also in jeweils 3 Minuten in der Phase A von 0° nach 180° und in der Phase C von 180° bis 360° gedreht und bleibt bei 0° und 180° in den Phasen B und D jeweils für 3 Minuten senkrecht zur Sonne ausgerichtet. Fig. 2 zeigt dabei den idealisierten Ablauf, bei dem nur die Winkelgeschwindigkeiten $\omega=\omega_0$ und $\omega=0$ vorkommen. Fig. 3 zeigt dagegen einen realistischeren Verlauf, in dem im Bereich von 0° und 180° die Rotation allmählich auf $\omega=0$ verlangsamt wird (Phasen B und D) und dann nach überschreiten der Winkel 0° und 180° allmählich wieder beschleunigt wird (Phasen A und C).

Für diesen Fall schwanken die Temperaturen zwischen -21.1 °C und +21.1 °C. Zur Berechnung der mittleren Leistung werden die folgenden Beiträge bestimmt:

• der Anteil aus der Rotation von -90° bis 0° (Dauer 90 sec)

$$P_1 = P_0 2/U \int_0^{90} (1 - a50 + a71.1\exp(-0.0025t))abs(\cos\omega t - \pi/2)dt$$

$$P_1 = P_0 2/U \int_0^{90} (1 - a50 + a71.1\exp(-0.0025t))abs(\sin\omega t)dt$$

$$P1 = P_0 \{0.188 - 2a71.1/U [\exp(-\alpha^2 + \omega^2)]_0^{90}\}$$

$$P1 = P_0(0.188 - 7.18910^{-4} (0.002 - 0.0175) /3.108\ 10^{-4})$$

$$P1 = P_0 (0.13 + 0.036) = 0.166\ P_0$$

• der Anteil aus der Ausrichtung bei 0°        (Dauer 180 sec)

$$P_2 = P_0\ 2/U \int_{90}^{270} (1 - a50 + a71.1\exp(-0.0025t))dt$$

$$P_2 = P_0 2/U (147.24 - 103.52(0.509 - 0.7985)) = 0.492\ P_0$$

• der Anteil aus der Rotation von 0° bis 90° (Dauer 90 sec)

$$P_3 = P_0\ 2/U \int_{270}^{360} (1 - a50 + a71.1\exp(-0.0025t))abs(\cos\omega(t - 270))dt$$

$$P_3 = P_0 (0.188 + 2a71.1/U [\exp(\alpha t)(\omega\sin\omega)(t - 270) - \alpha\cos\omega(t - 270))/(\alpha^2 + \omega^2)]_{270}^{360}\}]$$

$$P_3 = P_0(0.13 + 7.189\ 10^{-4} (-0.001 + 0.00889)/3.10810^{-4})) = 0.148\ P_0$$

Aus

$$P = P_1 + P_2 + P_3 = P_0 (0.166 + 0.492 + 0.148 = 0.806\ P_0$$

ist ersichtlich, dass man mit dem neuen Verfahren eine deutlich höhere mittlere Leistung erhalten kann..

Analog kann der Fall mit U = 24 min betrachtet werden. Mit diesem Beispiel soll der Einfluss einer verlängerten Dauer der Ausrichtung senkrecht zur Sonne gezeigt werden. In diesem Fall schwankt die Solargeneratortemperatur zwischen -35.8 °C und +35.8 °C.

Die Summe der 3 verschiedenen Anteile ergibt sich dann zu:

$$P = P_0 (0.087 + 0.716 + 0.069) = 0.872\, P_0$$

d.h. gegenüber einer Periode von 12 min bringt eine Periode von 24 min eine etwas höhere Solargeneratorleistung.

Schließlich kann in gleicher Weise der Fall mit U = 48 min betrachtet werden. Mit diesem Beispiel soll der Einfluss einer relativ langen Dauer der Ausrichtung senkrecht zur Sonne gezeigt werden. In diesem Fall schwankt die Solargeneratortemperatur zwischen -47.3 °C und +47.3 °C.

Die Summe der 3 verschiedenen Anteile ergibt sich dann zu:

$$P = P_0 (0.044 + 0.791 + 0.032) = P_0\, 0.867$$

Hier zeigt sich der Einfluss der hohen Temperatur bei einer zu langen Ausrichtung eines Solargenerator auf die Sonne. Gegenüber dem vorigen Fall ergibt sich nun wieder ein Abfall der mittleren Leistung.

Es kann folglich durch eine geeignete Wahl von U bzw. der Dauer der Bestrahlung der Solargeneratoren die resultierende Leistung der Solargeneratoren beeinflusst und optimiert werden.

**Patentansprüche**

1. Verfahren zum Betrieb eines Raumfahrzeugs, das zumindest eine mit einem Himmelskörper zusammenwirkende Einrichtung aufweist, wobei eine Rotation des Raumfahrzeuges um zumindest eine Körperachse des Raumfahrzeuges erfolgt, **dadurch gekennzeichnet, dass** die Rotation des Raumfahrzeuges verlangsamt wird, wenn die mit dem Himmelskörper zusammenwirkende Einrichtung im wesentlichen in Richtung des Himmelskörpers ausgerichtet ist.

2. Verfahren nach Anspruch 1, **dadurch gekennzeichnet, dass** die Rotation verlangsamt wird, wenn eine Kommunikationseinrichtung, Messeinrichtung oder Beobachtungseinrichtung des Raumfahrzeuges im wesentlichen in Richtung des Himmelskörpers ausgerichtet ist.

3. Verfahren nach Anspruch 1, **dadurch gekennzeichnet, dass** die Rotation verlangsamt wird, wenn die Normale zumindest einer Solargeneratorfläche im wesentlichen in Richtung der Sonne ausgerichtet ist.

4. Verfahren nach Anspruch 3, **dadurch gekennzeichnet, dass** die Rotation verlangsamt wird, wenn die Solargeneratorfläche durch nicht oder nur teilweise entfaltete Solargenerator-Paneels gebildet wird.

5. Verfahren nach einem der Ansprüche 1 bis 3, **dadurch gekennzeichnet, dass** die Rotation mit Hilfe von Drallrädern verlangsamt wird.

6. Verfahren nach einem der Ansprüche 1 bis 4, **dadurch gekennzeichnet, dass** die Rotation in einem Winkelbereich von - 45 ° bis + 45 ° um die Verbindungslinie zwischen Raumfahrzeug und dem Zentrum des Himmelskörpers verlangsamt wird.

**Claims**

1. Method of operating a space vehicle that has at least one device that interacts with a celestial body, wherein the space vehicle rotates around at least one body axis of the space vehicle, **characterized in that** the rotation of the space vehicle is retarded if the device that interacts with the celestial body is essentially aligned in the direction of the celestial body.

2. Method according to Claim 1, **characterized in that** the rotation is retarded if a communication device, measurement or observation device of the space vehicle is essentially aligned in the direction of the celestial body.

3. Method according to Claim 1, **characterized in that** the rotation is retarded if the normal to at least one solar generator surface is essentially aligned in the direction of the sun.

4. Method according to Claim 3, **characterized in that** the rotation is retarded if the solar generator surface is formed by unfolded or only partly unfolded solar generator panels.

5. Method according to any one of Claims 1 to 3, **characterized in that** the rotation is retarded with the aid of momentum wheels.

6. Method according to any one of Claims 1 to 4, **characterized in that** the rotation is retarded in an angular range from -45° to +45° around the connecting line between the space vehicle and the centre of the celestial body.

**Revendications**

1. Procédé d'opération d'un engin spatial, qui comporte au moins un dispositif fonctionnant en concomitance avec un corps céleste, sachant qu'une rotation de l'engin spatial autour d'au moins un axe corporel de l'engin survient, **caractérisé en ce que** la rotation de l'engin spatial est ralentie lorsque le dispositif fonctionnant en concomitance avec le corps céleste est orienté sensiblement en direction du corps céleste.

2. Procédé selon la revendication 1, **caractérisé en ce que** la rotation est ralentie lorsque d'un dispositif de communication, un dispositif de mesure ou un dispositif d'observation de l'engin spatial est orienté sensiblement en direction du corps céleste.

3. Procédé selon la revendication 1, **caractérisé en ce que** la rotation est ralentie lorsque la verticale d'au moins une surface de générateurs solaires est orientée sensiblement en direction du corps céleste.

4. Procédé selon la revendication 3, **caractérisé en ce que** la rotation est ralentie lorsque la surface du générateur solaire est conçue de panneaux de générateurs solaires non ou partiellement dépliables.

5. Procédé selon l'une quelconque des revendications 1 à 3, **caractérisé en ce que** la rotation est ralentie à l'aide de volants d'inertie.

6. Procédé selon l'une quelconque des revendications 1 à 4, **caractérisé en ce que** la rotation est ralentie dans une zone angulaire de -45° à +45° par rapport à la ligne de liaison entre l'engin spatial et le centre du corps céleste.

EP 1 243 507 B1

FIG.1

9

FIG. 2

FIG. 3